# NEW EUROPEAN PATENT SPECIFICATION

(11) **EP 1 505 388 B2**
(45) Date of publication and mention of the opposition decision: **30.07.2025**
(45) Mention of the grant of the patent: 23.01.2013
(21) Application number: 04017684.4
(22) Date of filing: 26.07.2004
(51) Int. Cl.: G01N 27/36

(54) **Glass electrode**
Glaselektrode
Electrode en verre

(30) Priority: 28.07.2003 JP 2003280776
(43) Date of publication of application: 09.02.2005
(73) Proprietor: HORIBA, LTD., Kyoto-shi, Kyoto (JP)
(72) Inventor: Iwamoto, Yasukazu, Minami-ku Kyoto-city Kyoto (JP); Takeichi, Shinji, Minami-ku Kyoto-city Kyoto (JP); Okawa, Hiromi, Minami-ku Kyoto-city Kyoto (JP)
(74) Representative: Müller Hoffmann & Partner

(56) References cited:
- EP-B1- 0 603 933
- DE-A1- 19 620 568
- DE-A1- 19 620 568
- DE-A1- 19 942 696
- DE-C3- 2 617 155
- GB-A- 574 029
- GB-A- 690 085
- JP-A- H0 912 332
- SU-A1- 1 121 247
- US-A- 3 124 470
- US-A- 3 357 909
- US-A- 3 357 909
- US-A- 3 450 604
- US-A- 3 450 604
- US-A- 3 458 422
- US-A- 3 480 536
- US-A- 3 480 536
- US-A- 3 498 901
- US-A- 3 498 901
- US-A- 3 713 992
- US-A- 3 713 992
- US-A- 4 028 196
- US-A- 4 076 543
- US-A- 4 626 515
- US-A- 4 687 500
- US-A- 5 105 957
- US-A- 5 885 915
- Owens-Illinois Inc., Detailed conceptual Design of a high-temperature Glass pH Electrode for Geothermal applications, Final report - Task 1, prepared for Pacific Northwest Laboratory Battelle Memorial Institute, May 1970
- R.H. Doremus, J, F. Kay, Initial crack paths in glass; influence of temperature and composition, Journal of Materials Science 14 (1979), S. 2236-2240
- Raja N. Khuri, Ion-Selective Electrodes in Biomedical Research,from: R.A. Durst Ed.), Ion-Selective Electrodes, Proceedings of a symposium held at the National Bureau of Standards,Gaithersburg, Maryland, January 30-31, 1969, Institute for Materials Research National Bureau of Standards Washington,D.C. 20234, November 1969, S.305
- R.G. Frieser, A Review of Solder Glasses, Electrocomponent Science and Technology, 1975, Vol. 2, S. 163-199
- H. Galster, „pH-Messung, Grundlagen, Methoden, Anwendungen,Gerte", VCH Verlagsgesellschaft mbH, 1990,S. 112-115, S .136-139
- H. Galster, „pH-Messung, Grundlagen, Methoden, Anwendungen,Gerate", Weinheim: VCH Verlagsgesellschaft mbH, 1990, S. 116- 121
- W.H. Kohl, “Materials Technology for electron tubes”, Reinhold Publishing Corporation, New York, 1951
- Schott, Product information No. 4840/1 e: Schott Glasses for Reed Switches, 1984 (S. annotation “4840/1 eX/84, printed in the Federal Republic of Germany
- Book George Eisenman, "GLASS ELECTRODES FOR HYDROGEN AND OTHER CATIONS" Marcel Dekker, Inc., New York, 1967
- Article Eisenman, "Glass Electrodes for Hydrogen and Other Cations", 1968
- Article Corning Glass Works, "Properties of Selected Commercial Glasses", 1960

## Description

### BACKGROUND OF THE INVENTION

### FIELD OF THE INVENTION

This invention relates to a glass electrode that has an arrangement wherein a responsive glass membrane is conjugated with a distal end portion of a stem glass tube and that is used for measuring pH or ionic concentration.

### DESCRIPTION OF THE RELATED ART

This kind of the glass electrode is so made to conjugate a responsive glass membrane that is a sensitive to hydrogen ions with a distal end portion of a stem glass tube as shown in a patent document 1 and a patent document 2. The responsive glass membrane is dipped in a sample(liquid) to measure pH and then an electromotive force generates according to a difference of pH between an internal solution of known pH and that is filled in the glass electrode and the sample and pH value of the sample is obtained by measuring the electromotive force.

The responsive glass membrane is required to use multicomponent glass containing a lot of Lithium in order to fully generate an electromotive force. The glass has a property that a thermal expansion coefficient is about three times as big as that of an ordinal silica glass. As a result of this, the stem glass tube with which the responsive glass membrane is conjugated is required to use glass whose thermal expansion coefficient is similar to that of the responsive glass membrane. If there is a difference in the thermal expansion coefficient, a crack or the like might generate due to rapid temperature ups and downs (a thermal shock) during a manufacturing process or in use.

As a result, lead glass whose thermal expansion coefficient is similar to that of the glass used for the responsive glass membrane is conventionally used for the stem glass tube.
Patent document 1: Japan laid-open disclosure public patent bulletin 2003-28829
Patent document 2: Japan laid-open disclosure public patent bulletin HEI10-316436

US 3 498 901 A1 relates to a glass electrode made of a copper connection electrode 1 provided with a thin layer 2 of a glass, wherein this unit can be cemented or fused to an insulating tube 3 through which a connection cable 4 extends. It is furthermore disclosed, that said copper oxide being diffused into the glass to form a layer having a thermal expansion coefficient intermediate the corresponding coefficients of the copper electrode.

DE 19620568 describes a glass electrode according to the preamble of claim 1.

However, the lead glass contains a lot of lead oxide that is a harmful substance and the lead oxide might have an adverse affect on environment due to elution into acid or alkali.

Then the present claimed invention intends to provide an environmentally friendly glass electrode without lead.

### SUMMARY OF THE INVENTION

This is achieved by the claimed subject-matter.

Since the responsive glass membrane contains Lithium neither lead nor lead compound is included in the glass that forms the stem glass tube and Lithium is contained by a predetermined amount so that a thermal expansion coefficient of the glass used for the stem glass tube is made within ± 20% of that of the glass used for the responsive glass membrane in order to make properties of the glass used for the stem glass tube close to that of Lithium and to conjugate the responsive glass membrane with the stem glass tube without difficulty.

From a functional point of view of the glass electrode, it is preferable that an internal resistance of.the glass used for the stem glass tube is 100 times and above as an internal resistance of the glass used for the responsive glass membrane.

In accordance with the present claimed invention, since it is possible to exclude lead or lead compound that has been included in a conventional stem glass tube, lead elution does not generate, thereby to avoid an adverse effect on environment. In addition, since the thermal expansion coefficient of the glass used for the stem glass tube is made to be close to the thermal expansion coefficient of the responsive glass membrane with which the stem glass tube is to be conjugated, it is possible to avoid a damage due to a thermal shock (temperature ups and downs) during a process of glass or a process of product assembling.

### BRIEF DESCRIPTION OF THE DRAWINGS

Fig. 1 is a partially broken view showing a part of an internal structure of a glass electrode in accordance with one embodiment of the present claimed invention.
Fig. 2 is a magnified view of A portion in Fig. 1.
Fig. 3 is a schematic diagram of component of a stem glass in accordance with the embodiment.
Fig. 4 is a property view of the stem glass in accordance with the embodiment.
Fig. 5 is a property performance view of the pH glass in accordance with the embodiment.
Fig. 6 is a partially broken view showing a part of an internal structure of a glass electrode in accordance with other embodiment of the present claimed invention.

### DETAILED DESCRIPTION OF THE INVENTION

A best mode for embodying the present claimed invention will be described with reference to the drawings.

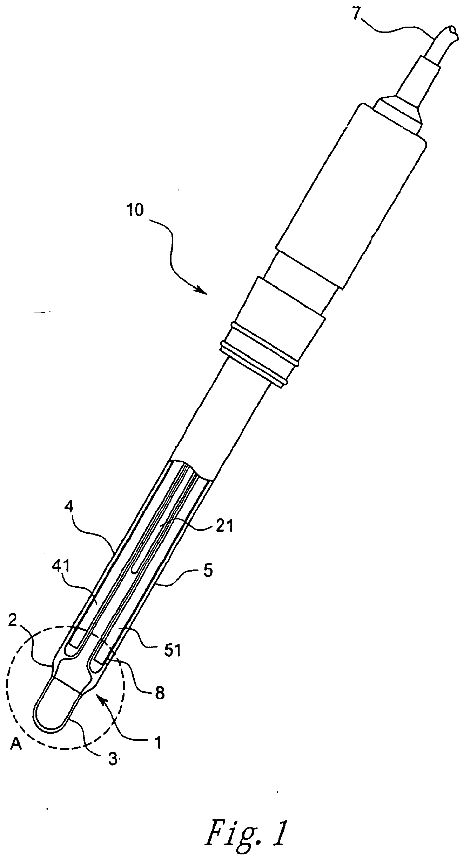

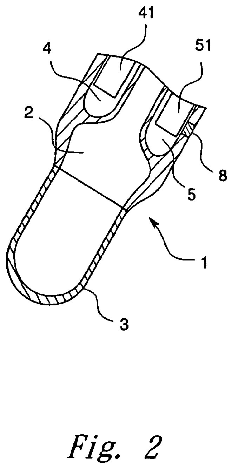

A glass electrode 1 in accordance with the embodiment is, as shown in Fig. 1 and Fig. 2, applied to a pH electrode 10 of a combination type and comprises a stem glass tube 2 and a responsive glass membrane 3 that is conjugated with a distal end portion of the stem glass tube 2.

The stem glass tube 2 is in a cylindrical shape and a reference electrode stem glass tube 4 and a temperature compensating electrode stem glass tube 5 are integrally formed with the stem glass tube 2 to surround a periphery of the stem glass tube 2. The stem glass tube 2 is so made to project its distal end portion a little from the reference electrode stem glass tube 4 and the temperature compensating electrode stem glass tube 5 and the responsive glass membrane 3 is conjugated with the distal end portion of the stem glass tube 2. The glass used for the stem glass tube 2, the glass used for the reference electrode stem glass tube 4 and the glass used for the temperature compensating electrode stem glass tube 5 are identical and its composition will be described later.

Each of the stem glass tube 2 and the reference electrode stem glass tube 4 accommodates an internal electrode of the glass electrode 21 and an internal electrode of the reference electrode 41 respectively and a KCI solution of, for example, pH7 is filled in the stem glass tube 2 and the reference electrode stem glass tube 4 as an internal solution. A temperature element 51 that outputs an electronic signal in compliance with temperature is accommodated inside the temperature compensating electrode stem glass tube 5. A lead wire, not shown in drawings, is connected with the internal electrode of the glass electrode 21, the internal electrode of the reference electrode 41 and the temperature element 51 respectively and each lead wire is bound up in a cable bundle 7 and extends outside from a proximal end portion of the stem glass tube 2 so as to be connected with a pH instrument, not shown in drawings. A numerical code of 8 is a liquid-junction arranged at an appropriate portion of an outer wall of the reference electrode stem glass tube 4.

The responsive glass membrane 3 is made of multicomponent glass containing Lithium and in a cylindrical shape whose distal end portion is formed to be in a general hemispherical shape. In order to conjugate the responsive glass membrane 3 with the stem glass tube 2, the glass used for the responsive glass membrane 3 is made in a molten state in a furnace, for example, kept at one thousand and several hundred degrees centigrade and the distal end portion of the stem glass tube 2 is dipped in the molten glass followed by being pulled up at a predetermined speed.

When the glass electrode 1 of the above arrangement is dipped into a sample to obtain its pH, an electromotive force generates in accordance with a pH difference between the internal solution and the sample and the electromotive force shows up as a difference in potential between the internal electrode of the glass electrode 21 and the internal electrode of the reference electrode 41. Since the electromotive force fluctuates in accordance with temperature, the pH meter body calculates pH of the sample by making use of an output signal value output by the temperature element 51 as a parameter and displays it in addition to the difference in potential.

In this embodiment, the glass (hereinafter referred to as a stem glass) that forms the stem glass tube 2 contains neither lead nor lead compound and at least either one of alkali metal oxide and alkali earth metal oxide is contained by a predetermined amount with an intention to make a thermal expansion coefficient of the stem glass within +20% of that of the glass (hereinafter referred to as pH glass) used for the responsive glass membrane 3. It is more preferable that the thermal expansion coefficient of the stem glass is within +10% of that of the pH glass.

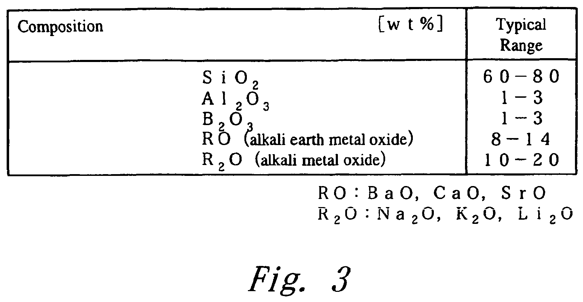

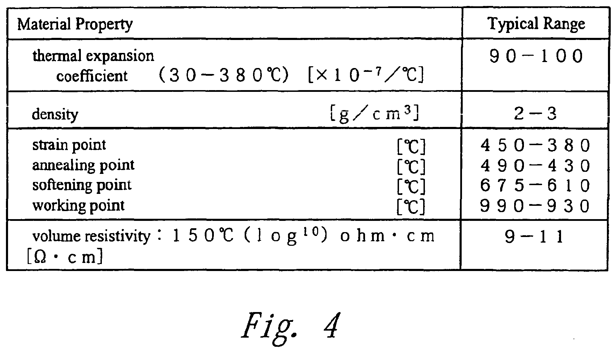

A composition of the stem glass and one of its properties are shown in Fig. 3 and Fig. 4.

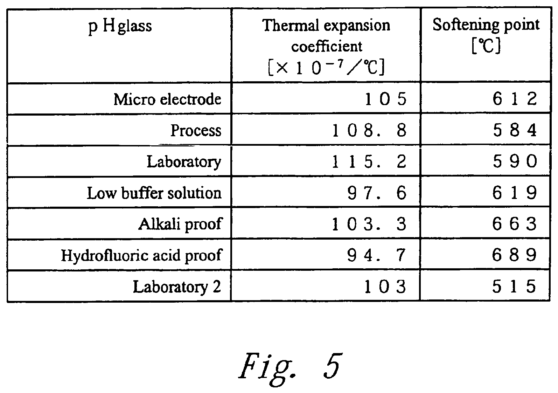

A property of the pH glass is shown in Fig. 5. Since there are various kinds of the pH glass as usage, a typical example will be represented. A resistance value of the pH glass is approximate 10⁷ Ω~10⁹Ω in a finished state in a shape of the responsive membrane.

As is clear from Fig. 3, the stem glass contains neither lead nor lead compound (lead oxide). As a result, the stem glass does not elute lead even if dipped in acid or alkali and does not produce an adverse affect on environment due to lead.

In addition, as is clear from Fig. 4 and Fig. 5, since the thermal expansion coefficient of the stem glass is within ±20% of that of various kinds of the pH glass, damage due to a thermal shock (temperature ups and downs) during a process of glass or a process of product assembling can be restrained. If the thermal expansion coefficient is over ± 20%, a rate of crack occurrence is 15% ∼ 20% and over and a yield ratio is extremely aggravated, which might result in failing to be a product.

Further, the stem glass is, although not shown in drawings, one hundred times of the pH glass in volume resistivity, thereby not to harm an accuracy of pH measurement.

The present claimed invention is not limited to the above-described embodiment.

For example, in order to reduce a rate of crack occurrence, it is preferable that the thermal expansion coefficient is made within ±10% of the thermal expansion coefficient of the pH glass, more preferably within ± several percent (%). As a result of this, a content ratio of RO (alkali earth metal oxide) or R₂O (alkali metal oxide) may be varied in conformity with the thermal expansion coefficient of the various types of pH glass or either one of RO and R₂O alone may be included.

In addition, Lithium oxide is included by a predetermined amount (0∼2 wt%) as alkali metal oxide. Since Lithium glass (glass containing a lot of Lithium) is frequently used as the responsive glass membrane, in case that Lithium is contained as the alkali metal, a chemical bounding force is obtained especially in a connected portion (a connected portion between the responsive glass membrane and the stem glass tube), and the connected portion is hardy and it is unlikely thermally distortion during a process remains.

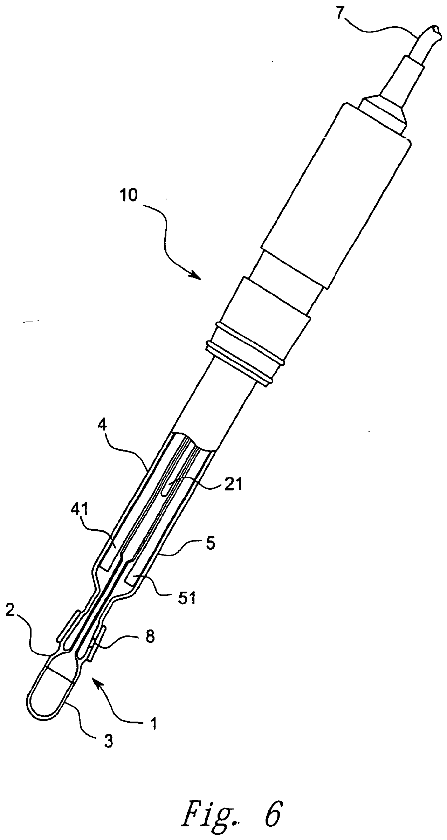

It is a matter of course that the liquid junction 8 may be applied to a shape of a sleeve as shown in Fig. 6, a shape of a pin hole or a shape of a double junction. In Fig. 6 the same numerical code is given to the components corresponding to the above embodiment.

In addition, the glass electrode is not necessarily integrated into the reference electrode or the temperature compensating electrode. The electrode of the present claimed invention may be applied to a simplicial electrode and then the same operation and effect can be produced. Further, it is possible to apply the present claimed invention to not only an electrode for pH measurement but also an electrode for measuring ionic concentration.

## Claims

1. A glass electrode (1) wherein a responsive glass membrane (3) is conjugated with a distal end portion of a stem glass tube (2) and has a connected portion between the responsive glass membrane (3) and the stem glass tube (2), wherein
- the responsive glass membrane (3) contains lithium,
- at least either one of alkali metal oxide or alkali earth metal oxide is contained by a predetermined amount in the glass that forms the stem glass tube (2), wherein,said alkali metal oxide is chosen to be lithium, such that the glass that forms the stem glass tube (2) contains a predetermined amount of lithium
- a thermal expansion coefficient of the glass used for the stem glass tube (2) is made within ±20% of that of the glass used for said responsive glass membrane (3), wherein neither lead nor a lead compound is included in the glass that forms the stem glass tube (2).

2. Glass electrode (1) according to claim 1, **characterized in that** an internal resistance of the glass used for the stem glass tube (2) is 100 times and more of an internal resistance of the glass used for said responsive glass membrane (3).

## Patentansprüche

1. Glaselektrode (1), wobei eine reaktive Glasmembran (3) mit einem distalen Endteil einer Schaftglasröhre (2) verbunden ist und einen verbundenen Teil zwischen der reaktiven Glasmembran (3) und der Schaftglasröhre (2) aufweist, wobei
- die reaktive Glasmembran (3) Lithium enthält,
- zumindest eines eines Alkalimetalloxids oder Erdalkalimetalloxids in einer vorbestimmten Menge in dem Glas enthalten ist, das die Schaftglasröhre (2) bildet, wobei das Alkalimetalloxid so gewählt ist, dass es sich um Lithium handelt, so dass das Glas, das die Schaftglasröhre (2) bildet, eine vorbestimmte Menge Lithium enthält,
- ein thermischer Ausdehnungskoeffizient des für die Schaftglasröhre (2) verwendeten Glases innerhalb von ±20 % jenes des für die reaktive Glasmembran (3) verwendeten Glases eingestellt ist, wobei weder Blei noch eine Bleiverbindung in dem Glas enthalten sind, das die Schaftglasröhre (2) bildet.

2. Glaselektrode (1) nach Anspruch 1, **dadurch gekennzeichnet, dass** ein Innenwiderstand des für die Schaftglasröhre (2) verwendeten Glases das 100-Fache oder mehr eines Innenwiderstands des für die reaktive Glasmembran (3) verwendeten Glases beträgt.

## Revendications

1. Électrode en verre (1) dans laquelle une membrane en verre sensible (3) est conjuguée à une partie d'extrémité distale d'une embase de tube en verre (2) et a une partie montée entre la membrane en verre sensible (3) et l'embase de tube en verre (2), dans laquelle
- la membrane en verre sensible (3) contient du lithium,
- au moins un oxyde de métal alcalin ou un oxyde de métal alcalino-terreux est contenu en une quantité prédéterminée dans le verre qui forme l'embase de tube en verre (2), dans laquelle, ledit oxyde de métal alcalin choisi est du lithium, de telle sorte que le verre qui forme l'embase de tube en verre (2) contienne une quantité prédéterminée de lithium,
- un coefficient de dilatation thermique du verre utilisé pour l'embase de tube en verre (2) est de ± 20 % de celui du verre utilisé pour ladite membrane en verre sensible (3), dans laquelle ni du plomb, ni un composant du plomb n'est contenu dans le verre qui forme l'embase de tube en verre (2).

2. Électrode en verre (1) selon la revendication 1, **caractérisée en ce qu'**une résistance interne du verre utilisé pour l'embase de tube en verre (2) est 100 fois et plus supérieure à une résistance interne du verre utilisé pour ladite membrane en verre sensible (3).
